# EUROPEAN PATENT APPLICATION

(11) **EP 1 176 354 A2**
(43) Date of publication of application: **30.01.2002**
(21) Application number: 01306207.0
(22) Date of filing: 19.07.2001
(51) Int. Cl.: F16L 37/252

(54) **Pipe joint for flue or chimney pipe**

(30) Priority: 25.07.2000 GB 0018224
(71) Applicant: Selkirk Manufacturing Limited, Barnstaple, Devon EX31 1LZ (GB)
(72) Inventor: Gomersall, Paul, Barnstaple, Devon EX31 1LZ (GB)
(74) Representative: Brandon, Paul Laurence

(57) **Abstract**

The present invention discloses a pipe joint in a flue or chimney pipe system comprising a first pipe part affording a female end part (12) and a second pipe part affording a male end part (10) and wherein the male and female end parts are releasably connectable by a bayonet-type coupling (17, 18, 30).

## Description

THIS INVENTION relates to pipe joints for a flue or chimney pipe and it is an aim of the preferred embodiment of the present invention to provide an improved pipe joint for connecting pipe sections in a flue or chimney system, whereby successive pipe sections may be readily connected without skilled labour or special tools and may be similarly disassembled.

According to the invention there is provided a pipe joint in a flue or chimney pipe system comprising a first pipe part affording a female end part and a second pipe part affording a male end part and wherein the male and female end parts are releasably connectable by a bayonet-type coupling.

In a preferred embodiment of the invention, said male and female end parts are of single walled tubular configuration and the male end part includes a generally cylindrical first portion of a first outside diameter, and the male end part, between its free end and said generally cylindrical first portion is nowhere of greater diameter than said first outside diameter, and wherein the female end part includes a second generally cylindrical portion of a second inside diameter such as to receive said first cylindrical portion of the male end part as a sliding and rotating fit, and the female end part is nowhere of lesser internal diameter than said second cylindrical part between the latter and the free end of the female pipe part, and with the exceptions, respectively, that said male end part has, spaced from said first part, at least one localised outward projection beyond the cylindrical external surface of said first pipe part and the female pipe part has, in said second cylindrical portion a channel or recess running in the longitudinal direction of the pipe and of a size to allow said localised projection to pass through longitudinally when the male pipe end is inserted in the female pipe end, the female pipe end having an annular region behind said cylindrical portion thereof, that is to say further from the free end of the female end part than said cylindrical portion thereof, which is of greater internal diameter than said cylindrical portion of the female pipe part, such as to accommodate said localised projection on the male pipe part when, after insertion of the male pipe part in the female pipe part, and passage of said localised projection through said groove or channel, to place said projection in said annular region, one pipe part can be rotated relative to the other to move said projection and groove out of axial alignment.

An embodiment of the invention is described below by way of example with reference to the accompanying drawings in which:
FIGURES 1A and 1B are schematic perspective views (partly in section in Figure 1A) showing a male part and a female part of the pipe coupling in accordance with the invention.
FIGURE 2 is a half-axial view of the coupling of Figure 1 along the lines II-II of Figures 4F and 4M.
FIGURE 3 is a half-axial view of the coupling of Figure 1 taken along the lines III-III of Figures 4F and 4M.
FIGURES 4F and 4M are respectively cross-sectional views of the male pipe part and the female pipe part taken along the lines F-F and M-M of Figure 2, and
FIGURE 5 is a half-axial view of part of the pipe coupling in the assembled condition and incorporating a sealing element.

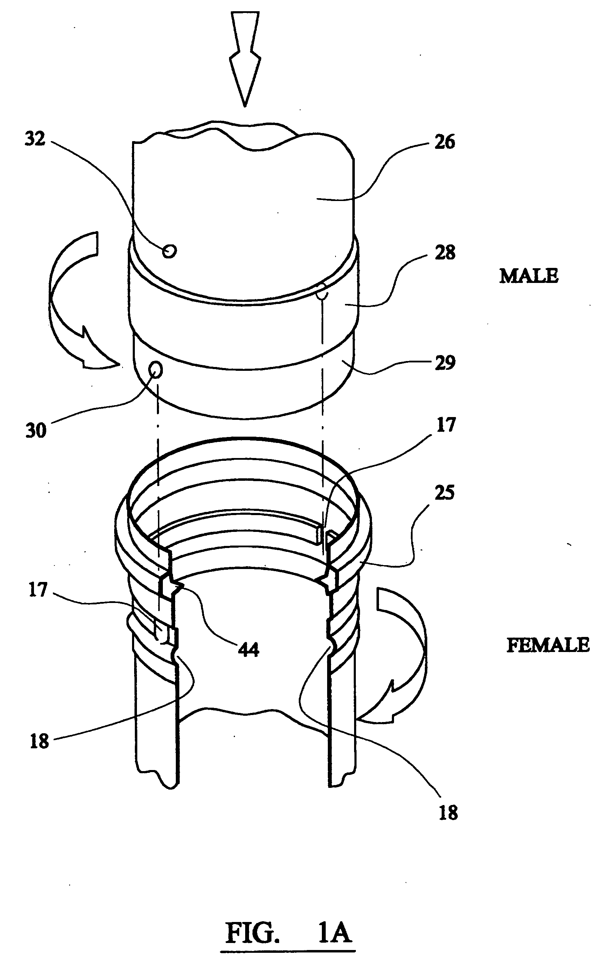

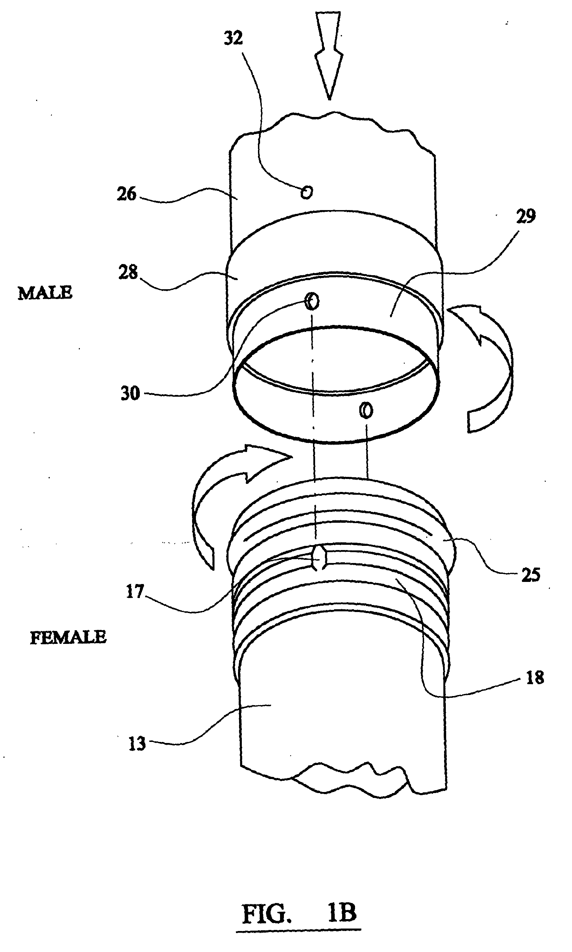

Referring to the drawings, two pipe sections adapted to be connected end to end, for example as part of a flue or chimney structure, have respective complementary ends which together form a pipe coupling, one of these ends being a male coupling part illustrated generally at 10 in Figure 1 and the other being a female coupling part illustrated at 12 in Figure 1. In the arrangement illustrated, the two pipes are single-wall pipes of sheet metal, with the respective coupling parts of the pipe joint being formed by expanding portions of the sheet metal. As a result, the female part 12 has, extending from the end of a cylindrical pipe part 13 of "normal" diameter (ie of the nominal size for the flue pipe of chimney stack etc.), a cylindrical portion 15 of a first internal diameter slightly greater than that of the part 13; an annular recess 18, on the interior of the pipe (with a corresponding annular bulge or rib on the outside of the pipe); a portion 20 on the side of the recess 18 nearer to the free end of the pipe, (the portion 20 being, except at two diametrally opposed locations, a cylindrical portion of the same internal and external diameter as portion 15). The pipe, at the axial end of portion 20 nearer the free end of the pipe, increases in diameter over a shoulder region to a cylindrical portion 21 of the same internal and external diameter as a cylindrical free end portion of the female pipe part. Between the parts 21 and 23 is located an annular groove or channel 25, on the inside of the pipe (defining a corresponding annular ridge or bead on the outside of the pipe). The groove 25 receives a sealing element 44 for sealing the pipe joint. The male pipe part 10, has, adjoining a cylindrical pipe part 26 of the "normal" nominal diameter of the flue, a part 28 of greater radius, such as to fit snugly within the portions 21 and 23 of the female pipe part, the male pipe part having an end part 29 extending from portion 28 to the free end, which is a cylindrical part of a diameter such as to fit snugly within the portions 15 and 20 of the female pipe part, except at two diametrally opposite locations at which the male pipe part is provided with radially outwardly projecting domes or bulges 30, (as shown in Figure 3).

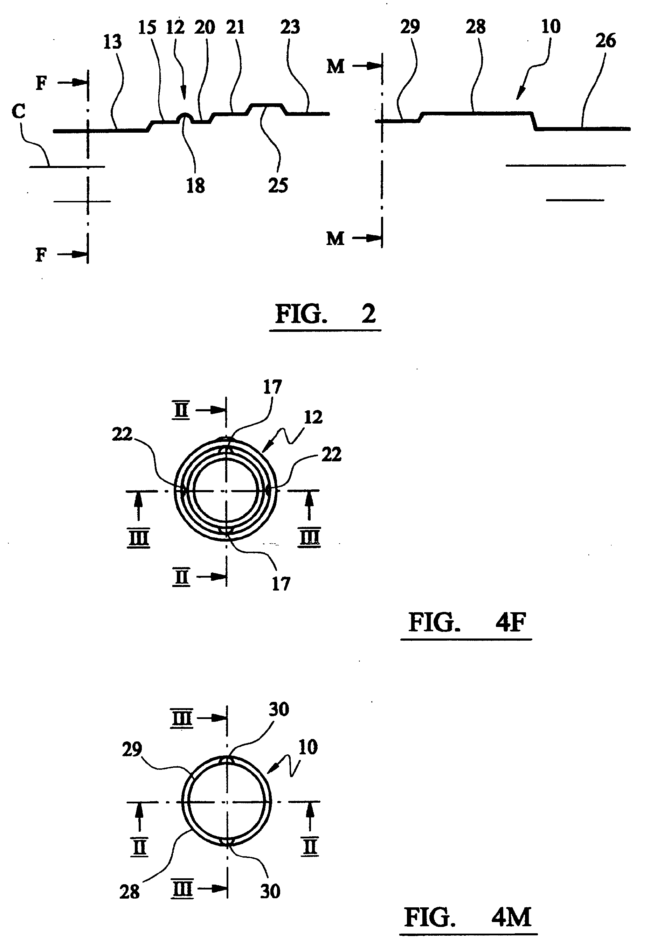

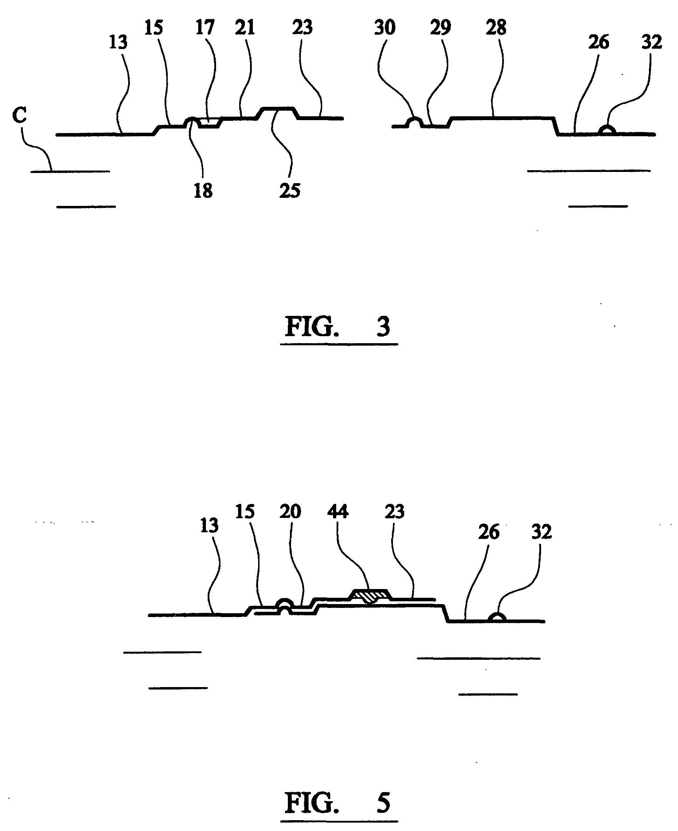

In order to couple the male pipe part 10 and female pipe part 12 together, the free end portion of the male pipe part is inserted within the enlarged free end part of the pipe part 12 so that end part 29 extends within the portion 20 of the female pipe part and is advanced until the bulges 30 meet the shoulder formed at the junction between portions 20 and 21. At the two diametrally opposite locations referred to in the portion 20 of the female pipe part, the material of the pipe part is deformed radially outwardly to provide, on the interior of the female pipe part, two longitudinally extending channels or grooves 17 extending from the portion 21 to the groove 18, and defining external longitudinal ribs. These channels or grooves are of a size to allow respective ones of the bulges 30 to pass through longitudinally. Thus, after insertion of the male pipe part into the female pipe part until the bulges 30 engage the shoulder at the junction of portions 20 and 21, one of the pipe parts is then rotated relative to the other about the common axis of these pipe parts until the bulges 30 come into register with the channels 17 allowing the pipe part 10 to be advanced further axially and thereby move the bulges 30 past portion 20, into groove 18 whereafter angular displacement of the pipe part 10 relative to the pipe part 12 about their common axis C will move the bulges 30 out of register with the channels 17 and thus lock the two pipe parts together against axial separation, as shown in Figure 5. It will be appreciated that the pipe parts 10 and 12 can readily be disconnected by the reverse procedure. The female pipe part may have indentations or flats 22 on the outside, on the bead defined externally by the internal groove 18, (the groove 18 thus having internal projections or restrictions defined by these indentations or flats 22). These indentations or flats 22 are sufficiently pronounced to prevent passage of the bulges 30 on the male pipe part and thus act as stops to limit rotation of the male pipe part relative to the female pipe part once the male pipe part has been inserted fully into the female pipe part. As shown in Figure 4F, there are preferably two such indentations or flats 22 diametrally opposed and spaced by 90° from the channels or grooves 17.

Thus, once the male pipe part has been fully inserted into the female pipe part, it is possible to rotate it through a maximum of 90° before the bulges 30 engage the flats or indentations 17 to ensure that the male and female pipe parts are securely locked together. As indicated in Figure 1A and Figure 5, visual indicators, for example in the form of dimples or pips 32, may be provided on the male pipe part 10 at a location sufficiently far from the free end of pipe part 10 to remain exposed to view when the male pipe part is fully inserted in the female pipe part. The pips 32 are in longitudinal alignment with respective ones of the bulges, so that a workman assembling the flue of chimney system merely has to line up the pips 32 angularly with the (visible) external longitudinal ribs on the female pipe part 12, which correspond with the internal longitudinal channels or grooves 17 to ensure that the bulges or domes 30 are in alignment with these channels or grooves so that the male pipe part can be fully inserted to place the bulges 30 in the annular groove or recess 18.

If desired, and as illustrated in Figure 5, an annular seal 44 may be fitted within the female pipe part, in the groove 25, before insertion of the male pipe part so that, when the two pipe parts are fitted together fully as shown in Figure 5, the seal 44 engages the exterior of the portion 28 of the male pipe part. It will be understood that the use of seal 44 is optional.

For security, a clamping or retaining band, known *per se*, but not shown, may be secured around the assembled pipe joint to prevent relative movement between the pipe parts connected by the pipe joint.

It will be understood that, if desired, in an alternative arrangement, the male pipe part may have a circumferential groove on its exterior surface with which longitudinal grooves on the exterior of the male pipe part communicate and the female pipe part may have inwardly projecting bumps or studs which can pass along said longitudinal grooves into said circumferential groove when the male pipe part is inserted into the female part until they enter said circumferential groove, after which, as before, relative rotation between the pipe parts will move said studs out of register with the longitudinal grooves to lock the pipe parts against axial separation. Similarly, the seal may be accommodated in a groove on the exterior of the male pipe part for cooperation with the interior surface of the female pipe part.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A pipe joint in a flue or chimney pipe system comprising a first pipe part affording a female end part and a second pipe part affording a male end part and wherein the male and female end parts are releasably connectable by a bayonet-type coupling.

2. A pipe joint according to claim 1 wherein said male and female end parts are of single-walled tubular configuration and the male end part includes a generally cylindrical first portion of a first outside diameter, and the male end part, between its free end and said generally cylindrical first portion is nowhere of greater diameter than said first outside diameter, and wherein the female end part includes a second generally cylindrical portion of a second inside diameter such as to receive said first cylindrical portion of the male end part as a sliding and rotating fit, and the female end part is nowhere of lesser internal diameter than said second cylindrical part between the latter and the free end of the female pipe part, and with the exceptions, respectively, that said male end part has, spaced from said first part, at least one localised outward projection beyond the cylindrical external surface of said first pipe and the female pipe part has, in said second cylindrical portion a channel or recess running in the longitudinal direction of the pipe and of a size to allow said localised projection to pass through longitudinally when the male pipe end is inserted in the female pipe end, the female pipe end having an annular region behind said cylindrical portion thereof, that is to say further from the free end of the female end part than said cylindrical portion thereof, which is of greater internal diameter than said cylindrical portion of the female pipe part, such as to accommodate said localised projection on the male pipe part when, after insertion of the male pipe part in the female pipe part, and passage of said localised projection through said groove or channel, to place said projection in said annular region, one pipe part can be rotated relative to the other to move said projection and groove out of axial alignment.

3. A pipe joint according to claim 1 wherein said male and female end parts are of single-walled tubular configuration and the male end part includes a generally cylindrical first portion of a first outside diameter, and the male end part, between its free end and said generally cylindrical first portion is nowhere of greater diameter than said first outside diameter, and wherein the female end part includes a second generally cylindrical portion of a second inside diameter such as to receive said first cylindrical portion of the male end part as a sliding and rotating fit, and the female end part is nowhere of lesser internal diameter than said second cylindrical part between the latter and the free end of the female pipe part, and wherein said female end part has, spaced from said first part, at least one localised inward projection beyond the cylindrical internal surface of said second pipe part and the male pipe part has, in said first cylindrical portion a channel or recess on the exterior of the pipe part, running in the longitudinal direction of the pipe and of a size to allow said localised projection to pass through longitudinally when the male pipe end is inserted in the female pipe end, the male pipe end having an annular region behind said cylindrical portion thereof, that is to say further from the free end of the male end part than said cylindrical portion thereof, which is of lesser internal diameter than said cylindrical portion of the female pipe part, such as to accommodate said localised projection on the female pipe part when, after insertion of the male pipe part in the female pipe part, and passage of said localised projection through said groove or channel, to place said projection in said annular region, one pipe part can be rotated relative to the other to move said projection and groove out of axial alignment.

4. A pipe joint according to claim 1, which further comprises a visual indicator for aligning the male and female end parts.
